Europäisches Patentamt

European Patent Office

Office européen des brevets

(11) Veröffentlichungsnummer: **0 307 695 B1**

(19)

(12) **EUROPÄISCHE PATENTSCHRIFT**

(45) Veröffentlichungstag der Patentschrift: **04.11.92**

(21) Anmeldenummer: **88113984.4**

(22) Anmeldetag: **26.08.88**

(51) Int. Cl.⁵: **A47G 27/04**, B32B 27/08, D06N 7/00, E04F 15/18, E04F 21/22

(54) Verfahren zur Herstellung eines Fussbodenbelages, insbesondere für Flugzeuge.

(30) Priorität: **15.09.87 DE 3730883**

(43) Veröffentlichungstag der Anmeldung:
**22.03.89 Patentblatt 89/12**

(45) Bekanntmachung des Hinweises auf die
Patenterteilung:
**04.11.92 Patentblatt 92/45**

(84) Benannte Vertragsstaaten:
**CH DE FR GB IT LI NL**

(56) Entgegenhaltungen:
**DE-A- 952 921**
**DE-A- 1 784 300**
**DE-A- 3 304 232**

(73) Patentinhaber: **METZELER Automotive Profiles GmbH**
**Bregenzer Strasse 133**
**W-8990 Lindau / Bodensee(DE)**

(72) Erfinder: **Kral, Hans-Peter**
**Freiherr-vom-Stein-Strasse 2**
**W-6946 Gorxheimertal-Trösel(DE)**
Erfinder: **Gey, Mathias**
**Weidenring 28b**
**W-2153 Neu Wulmstorf(DE)**
Erfinder: **Grothe, Jürgen**
**Hindenburgstrasse 78**
**W-2000 Hamburg 60(DE)**
Erfinder: **Pittel, Horst**
**Heiterwanger Strasse 40**
**W-8000 München 70(DE)**
Erfinder: **Zelt, Rainer**
**Gartenstrasse 1**
**W-899 Lindau(DE)**

(74) Vertreter: **Michelis, Theodor, Dipl.-Ing.**
**Seibert + Michelis Rechtsanwälte und Pa-**
**tentanwälte Tattenbachstrasse 9**
**W-8000 München 22(DE)**

EP 0 307 695 B1

## Beschreibung

Die Erfindung bezieht sich auf ein Verfahren zur Herstellung eines Fußbodenbelages, insbesondere für Flugzeuge, aus einer starren Unterplatte in Form eines ausgehärteten, faserverstärkten Laminats auf Phenolharzbasis und einer Schicht aus einem flammwidrig eingestellten Polysiloxan.

Ein derartiger Fußbodenbelag ist aus der DE-OS 33 04 232 bekannt. Danach wird auf eine steife Platte aus einem faserverstärkten Laminat auf Phenolharzbasis eine Schicht aus flammwidrig eingestelltem Polysiloxan aufvulkanisiert. Derartige, nicht textile Fußbodenbeläge werden im allgemeinen im Cockpit und in den Naßbereichen, d.h. in den Toiletten und den Bordküchen von Flugzeugen, verlegt, wobei zum Überbrücken der Sitzschienen und zum Schutz des Fußbodenbelages gegen ein Durchschlagen bei hohen punktuellen Belastungen der Belag eine feste Unterplatte aufweisen muß.

Es hat sich jedoch gezeigt, daß ein derartiges Aufvulkanisieren der Polysiloxan-Bahn auf die starre Phenolharzplatte mit erheblichen Schwierigkeiten verbunden ist, da diese Vulkanisation unter erhöhter Temperatur und hohem Druck mittels beheizter Walzen durchgeführt werden muß, wodurch die Phenolharzplatten sehr leicht brechen. Darüber hinaus hat die Festigkeit der Verbindung zwischen der Phenolharzplatte und der darüberliegenden Polysiloxanschicht oft den gestellten Anforderungen nicht entsprochen.

Der vorliegenden Erfindung liegt daher die Aufgabe zugrunde, ein Verfahren anzugeben, mit dem ein derartiger Fußbodenbelag auf einfache Weise hergestellt werden kann, der den erforderlichen Festigkeitsanforderungen genügt und bei dem ohne erhöhte Temperatur ausgekommen werden kann.

Zur Lösung dieser Aufgabe ist erfindungsgemäß vorgesehen, daß auf die Laminatplatte eine Schicht aus einem im Rohzustand zähflüssigen Polysiloxan als Kleber aufgebracht und anschließend die flexible, ausvulkanisierte Polysiloxanbahn unter Anpressung bei Raumtemperatur aufgeklebt wird.

Mit einem derartigen Verfahren ist es also möglich, unter Verwendung eines zähflüssigen Polysiloxans als Kleber, das eine besondere Affinität zu ausvulkanisiertem Polysiloxan hat und mit diesem auch bei Raumtemperatur vernetzt, die Polysiloxanbahn dauerhaft mit der Laminatplatte zu verbinden, ohne daß dabei eine erhöhte Temperatur erforderlich ist, sondern die Verbindung bei Raumtemperatur erfolgt.

Zweckmäßigerweise wird der Polysiloxankleber in einer Schichtdicke von 0,1 bis 0,2 mm aufgebracht.

Vor einem Aufbringen des Klebers ist es zweckmäßig, die Laminatplatte mit einem Lösungsmittel, beispielsweise Aceton oder Benzin, zu reinigen und mit einer Primerschicht in Form feuchtigkeitsempfindlicher Lösungen mehrfunktioneller Silane oder Polysiloxane in organischen Lösungsmitteln zu versehen.

Anschließend sollte dann der verpreßte Fußbodenbelag über einen Zeitraum von 24 bis 48 h bei Raumtemperatur und erhöhter Luftfeuchtigkeit einer vollständigen Vernetzung unterzogen werden.

Ferner bezieht sich die Erfindung auf einen Fußbodenbelag mit einer starren Unterplatte in Form eines ausgehärteten faserverstärkten Laminats auf Phenolharzbasis und einer Schicht aus einem flammwidrig eingestellten Polysiloxan, bei dem erfindungsgemäß die Laminatplatte und die ausvulkanisierte Polysiloxanbahn mittels eines bei Raumtemperatur aufgebrachten und vernetzenden Polysiloxans als Kleber miteinander verklebt sind.

Schließlich bezieht sich die Erfindung auf eine Vorrichtung zur Durchführung des eingangs genannten Verfahrens, wobei erfindungsgemäß oberhalb einer starren Unterplatte mit Fixiervorrichtungen für die Laminatplatte eine Kleberauftrag- und Anpreßvorrichtung entlang der Laminatplatte verfahrbar angeordnet ist.

Dabei kann die Kleberauftrag- und Anpreßvorrichtung eine Ablaufstation für die Polysiloxanbahn, Umlenkrollen und zwei dicht oberhalb der Laminatplatte angeordnete Anpreßwalzen sowie in Verfahrrichtung vor den Anpreßwalzen einen Kleberrakel mit einer Kleberzuführung aufweisen.

Anhand einer schematischen Zeichnung sind Aufbau und Funktionsweise von Ausführungsbeispielen nach der Erfindung näher erläutert. Dabei zeigen:

Fig. 1    einen Längsschnitt durch einen Fußbodenbelagin stark vergrößertem Maßstab mit dem Schichtaufbau und

Fig. 2    die Seitenansicht einer nur schematisch dargestellten Kleberauftrag- und Anpreßvorrichtung.

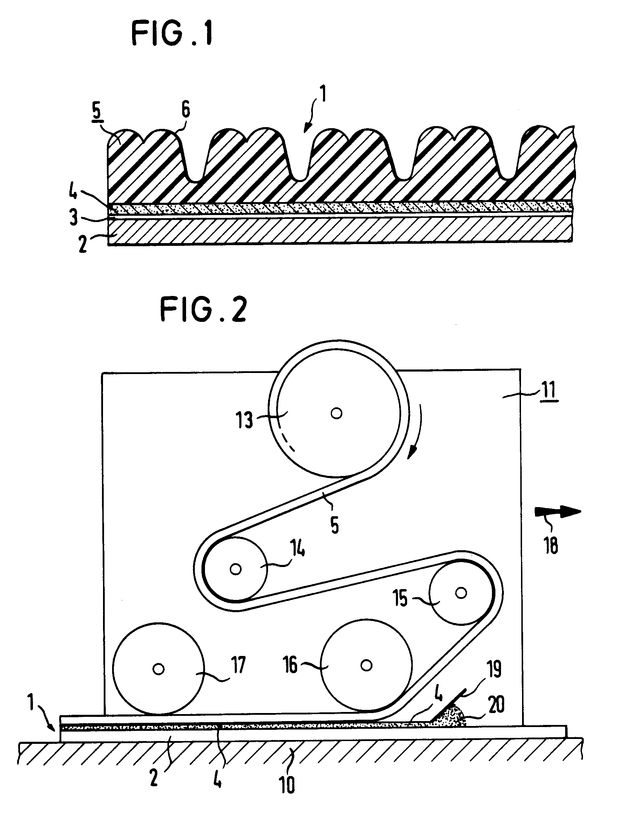

Der in Fig. 1 im Längsschnitt dargestellte Fußbodenbelag 1, der in den Naßbereichen und im Cockpit eines Flugzeuges eingesetzt werden soll, weist zunächst eine untere starre Laminatplatte 2 auf, die aus einem Phenol- oder einem anderen Harz mit einer Faserverstärkung besteht. Die Fasern können als Gewebe oder Vlies in das Harz eingebettet sein und aus Glas, Baumwolle, Polyamid oder Aramid bestehen. Diese Platte 2 aus Phenolharz ist durch die verwendeten Materialien selbst nicht brennend.

Diese relativ starre und dem Bodenbelag die mechanische Festigkeit gebende Laminatplatte 2 hat zweckmäßigerweise eine Dicke von etwa 0,3 bis 0,5 mm.

Auf die Oberseite der Laminatplatte 2 ist nunmehr eine Primer- bzw. Grundierungsschicht 3 aufgebracht. Bei dieser Grundierung 3 handelt es sich um feuchtigkeitsempfindliche Lösungen mehrfunktioneller Silane bzw. Polysolixane in organischen Lösungsmitteln. Das mit dieser Grundierungsschicht 3 versehene Laminat 2 ist dann zweckmäßigerweise mindestens 1 Stunde bei Raumtemperatur zu trocknen.

Auf diese Grundierung 3 wird dann ein Kleber 4 auf Basis eines im Rohzustand zähflüssigen Polysiloxan in einer Schichtdicke von 0,1 bis 0,2 mm aufgetragen. Anschließend wird eine Bahn 5 aus einem flammwidrigen Polysiloxan aufgelegt und aufgepreßt, so daß eine gute Verklebung erreicht wird. Zweckmäßigerweise wird dabei ein Polysiloxan verwendet, wie es in der Europäischen Patentanmeldung 0051212 beschrieben ist. Dieses flammwidrige Polysiloxan besteht aus einem Diorganopolysiloxan, feinzerteilter Kieselsäure und/oder anderen Füllstoffen, feinzerteiltem Titandioxid, Platin, einem Härtungsmittel sowie einer Stickstoffverbindung.

Die Oberfläche dieser Polysiloxanbahn 5 ist dann noch mit einer Struktur 6 versehen, die in Form von Wölbungen oder Rillen oder als imitierte Kordelung mit parallelen Rillen ausgebildet sein kann. Besonders zweckmäßig ist dabei eine rillenförmige Profilierung, damit Flüssigkeiten nur in einer bestimmten Richtung abfließen können und dadurch außerdem verhindert wird, daß sich verschüttete Flüssigkeiten stark ausbreiten.

Die Dicke dieser Polysiloxanbahn beträgt dabei etwa 2 mm und an der tiefsten Stelle der Kordelstruktur 6 etwa 0,3 bis 0,5 mm.

Fig. 2 zeigt eine Vorrichtung zur Herstellung eines Fußbodenbelages nach Fig. 1. Dabei ist oberhalb einer starren Unterplatte 10 eine Kleberauftrag- und Anpreßvorrichtung 11 verfahrbar angeordnet. Auf der starren Unterplatte 10 wird nunmehr zunächst die Phenolharzplatte 2 aufgelegt und mit nicht näher dargestellten Arretierungsmitteln in ihrer Lage fixiert. Die Kleberauftrag- und Anpreßvorrichtung 11 weist eine Ablaufstation 13 für die Polysiloxanbahn 5 sowie zwei nachgeschaltete Umlenkrollen 14 und 15 und zwei dicht über der Phenolharzplatte 2 gelagerte Anpreßwalzen 16 und 17 auf. Vor der in Verfahrrichtung 18 vorderen Anpreßwalze 16 ist ein Kleberrakel 19 für den Polysiloxankleber 20 und eine nicht näher dargestellte Kleberzuführungsvorrichtung vorgesehen.

Nach Auflegen der grundierten Phenolharzplatte 2 verfährt die Kleberauftrag- und Anpreßvorrichtung 11 mittels eines elektrischen Antriebes in Pfeilrichtung 18, bringt dabei über den Kleberrakel 19 eine gleichmäßig dünne Schicht 4 des Polysiloxanklebers 20 auf die Phenolharzplatte 2 auf und preßt dann die von der Ablaufstation 13 ablaufende Polysiloxanbahn 5 fortlaufend mittels der Anpreßwalzen 16 und 17 auf die Phenolharzplatte 2 auf.

Nach der Verklebung und Aufpressung benötigt der so hergestellte Fußbodenbelag noch mindestens 24 bis 48 h, um bei Raumtemperatur und einer genügend hohen Luftfeuchtigkeit vollständig auszureagieren und zu vernetzen. Der Kleber 4 reagiert dabei unter Abspaltung geringer Mengen an Essigsäure mit der Luftfeuchtigkeit, bevor er fest wird und damit eine dauerhafte Verbindung herstellt.

Das Gewicht des fertigen Fußbodenbelages beträgt dann etwa 2.700 g/m$^2$ und bildet damit einen dauerhaften, flammfesten Belag, der auch hohen Belastungen, insbesondere punktförmiger Art, sicher standhält.

## Patentansprüche

1. Verfahren zur Herstellung eines Fußbodenbelages, insbesondere für Flugzeuge, aus einer starren Unterplatte in Form eines ausgehärteten, faserverstärkten Laminats auf Phenolharzbasis und einer damit verbundenen Schicht aus einem flammwidrig eingestellten Polysiloxan, dadurch gekennzeichnet, daß auf die Laminatplatte eine Schicht aus einem im Rohzustand zähflüssigen Polysiloxan als Kleber aufgebracht und anschließend die flexible, ausvulkanisierte Polysiloxanbahn unter Anpressung bei Raumtemperatur aufgeklebt wird.

2. Verfahren nach Anspruch 1, dadurch gekennzeichnet, daß der Polysiloxankleber in einer Schichtdicke von 0,1 bis 0,2 mm aufgebracht wird.

3. Verfahren nach Anspruch 1, dadurch gekennzeichnet, daß die Laminatplatte mit einem Lösungsmittel gereinigt und mit einer Primerschicht versehen wird.

4. Verfahren nach Anspruch 3, dadurch gekennzeichnet, daß als Lösungsmittel Aceton oder Benzin verwendet wird.

5. Verfahren nach Anspruch 3, dadurch gekennzeichnet, daß als Primer feuchtigkeitsempfindliche Lösungen mehrfunktioneller Silane oder Polysiloxane in organischen Lösungen verwendet werden.

6. Verfahren nach einem oder mehreren der Ansprüche 1 bis 5, dadurch gekennzeichnet, daß der verpreßte Fußbodenbelag über einen Zeitraum von 24 bis 48 h bei Raumtemperatur und erhöhter Luftfeuchtigkeit einer vollständigen Vernetzung unterzogen wird.

7. Fußbodenbelag, insbesondere für Flugzeuge, mit einer starren Unterplatte (2) in Form eines ausgehärteten, faserverstärkten Laminats auf Phenolharzbasis und einer Schicht (5) aus einem flammwidrig eingestellten Polysiloxan, dadurch gekennzeichnet, daß die Laminatplatte (2) und die ausvulkanisierte Polysiloxanbahn (5) mittels eines bei Raumtemperatur aufgebrachten und vernetzenden Polysiloxans als Kleber (4) miteinander verklebt sind.

8. Vorrichtung zur Durchführung des Verfahrens nach Anspruch 1, dadurch gekennzeichnet, daß oberhalb einer starren Unterplatte (10) mit Fixiervorrichtungen für die Laminatplatte (2) eine Kleberauftrag- und Anpreßvorrichtung (11) entlang der Laminatplatte (2) verfahrbar angeordnet ist.

9. Vorrichtung nach Anspruch 8, dadurch gekennzeichnet, daß die Kleberauftrag- und Anpreßvorrichtung (11) eine Ablaufstation (13) für die Polysiloxanbahn (5), Umlenkrollen (14, 15) und zwei dicht oberhalb der Laminatplatte (2) angeordnete Anpreßwalzen (16, 17) sowie in Verfahrrichtung (18) vor den Anpreßwalzen (16, 17) einen Kleberrakel (19) für den Kleber (4) aufweist.

**Claims**

1. Process for manufacturing a floor covering, in particular for aircraft, comprising a rigid backing in the form of a cured, fibre-reinforced, phenolic resin-based laminate and a layer of a standard flame-resistant polysiloxane which is bonded thereto, characterized in that a layer of a polysiloxane, which is viscous in its crude state, is applied as an adhesive onto the laminate backing and then the flexible, fully cured polysiloxane web is glued on under contact pressure at room temperature.

2. Process according to claim 1, characterized in that the polysiloxane adhesive is applied to a layer thickness of 0.1 to 0.2 mm.

3. Process according to claim 1, characterized in that the laminate backing is cleaned with a solvent and is provided with a priming coat.

4. Process according to claim 3, characterized in that acetone or benzine is used as a solvent.

5. Process according to claim 3, characterized in that moisture-sensitive solutions of polyfunctional silanes or polysiloxanes in organic solvents are used as a primer.

6. Process according to one or more of claims 1 to 5, characterized in that the pressed floor covering is subjected to full curing for a period of 24 to 48 hours at room temperature and increased atmospheric humidity.

7. Floor covering, in particular for aircraft, having a rigid backing (2) in the form of a fully cured, fibre-reinforced, phenolic resin-based laminate and a layer (5) of a standard flame-resistant polysiloxane, characterized in that the laminate backing (2) and the fully cured polysiloxane web (5) are glued together using as an adhesive (4) a polysiloxane which is applied and cures at room temperature.

8. Device for effecting the process according to claim 1, characterized in that there is, above a rigid base (10) with fixing devices for the laminate backing (2), an adhesive-applying and contact pressure device (11) disposed so as to be displaceable along the laminate backing (2).

9. Device according to claim 8, characterized in that the adhesive-applying and contact pressure device (11) has a delivery station (13) for the polysiloxane web (5), deflection rollers (14, 15), two contact pressure rollers (16, 17) disposed closely above the laminate backing (2), as well as an adhesive doctor blade (19) for the adhesive (4) disposed, in displacement direction (18), in front of the contact pressure rollers (16, 17).

**Revendications**

1. Procédé de fabrication d'un revêtement de sol, notamment pour des avions, constitué d'une plaque inférieure rigide sous la forme d'un stratifié durci et renforcé par des fibres à base de résine phénolique et d'une couche qui y est reliée, en un polysiloxane ignifugé, caractérisé en ce qu'il consiste à déposer sur la plaque stratifiée une couche en un polysiloxane visqueux à l'état brut servant de produit adhésif, et ensuite, à coller la bande de polysiloxane souple et vulcanisée par application d'une pression à la température ambiante.

2. Procédé suivant la revendication 1, caractérisé en ce qu'il consiste à déposer le produit adhésif à base de polysiloxane en une épaisseur de couche de 0,1 à 0,2 mm.

3. Procédé suivant la revendication 1, caractérisé en ce qu'il consiste à nettoyer la plaque stratifiée par un solvant et à la munir d'une couche primaire.

4. Procédé suivant la revendication 3, caractérisé en ce qu'il consiste à utiliser comme solvant de l'acétone ou du benzène.

5. Procédé suivant la revendication 3, caractérisé en ce qu'il consiste à utiliser comme primaires des solutions sensibles à l'humidité de silane plurifonctionnel ou de polysiloxane en solutions organiques.

6. Procédé suivant l'une ou plusieurs des revendications 1 à 5, caractérisé en ce qu'il consiste à soumettre le revêtement de sol comprimé a une réticulation complète pendant une durée de 24 à 48 heures à la température ambiante et sous une grande hygrométrie.

7. Revêtement de sol notamment pour des avions, comprenant une plaque inférieure (2) rigide sous la forme d'un stratifié durci et renforcé par des fibres de verre à base de résine phénolique et une couche (5) en un polysiloxane ignifugé, caractérisé en ce que la plaque stratifiée (2) et la bande de polysiloxane (5) vulcanisée sont collées l'une à l'autre au moyen d'un polysiloxane déposé et réticulé à la température et servant de produit adhésif (4).

8. Dispositif pour la mise en oeuvre du procédé suivant la revendication 1, caractérisé en ce qu'au-dessus d'une plaque inférieure (10) rigide ayant des dispositifs de fixation de la plaque stratifiée (2) est monté mobile, le long de la plaque stratifiée (2), un dispositif de dépôt et d'application par pression (11) d'un produit adhésif.

9. Dispositif suivant la revendication 8, caractérisé en ce que le dispositif de dépôt et d'application par pression (11) d'un produit adhésif comporte un poste de déroulement (13) de la bande de polysiloxane, des rouleaux de renvoi (14,15) et deux cylindres (16,17) d'application d'une pression disposés juste au-dessus de la plaque stratifiée (2) ainsi que, en amont dans la direction de déplacement (18), des cylindres (16,17) d'application d'une pression, une râcle (19) pour le produit adhésif (4).

# FIG.1

# FIG.2